(19) Europäisches Patentamt
European Patent Office
Office européen des brevets

(11) Veröffentlichungsnummer: **0 043 927**
**B1**

# (12) EUROPÄISCHE PATENTSCHRIFT

(45) Veröffentlichungstag der Patentschrift: **16.05.84**

(51) Int. Cl.³: **C 09 B 62/026**

(21) Anmeldenummer: **81104599.6**

(22) Anmeldetag: **15.06.81**

## (54) Verfahren zur Herstellung von Azo-Reaktivfarbstoffen.

(30) Priorität: **26.06.80 DE 3023920**

(43) Veröffentlichungstag der Anmeldung: **20.01.82 Patentblatt 82/3**

(45) Bekanntmachung des Hinweises auf die Patenterteilung: **16.05.84 Patentblatt 84/20**

(84) Benannte Vertragsstaaten: **CH DE FR GB IT LI**

(56) Entgegenhaltungen:
**CH - A - 517 159**
**DE - A - 2 401 762**

(73) Patentinhaber: **BAYER AG, Konzernverwaltung RP Patentabteilung, D-5090 Leverkusen 1 Bayerwerk (DE)**

(72) Erfinder: **Jäger, Horst, Dr., Carl-Rumpff-Strasse 37, D-5090 Leverkusen 1 (DE)**
Erfinder: **Ditzer, Reiner, Dr., In der Follmuehle 21, D-5068 Odenthal 2 (DE)**

**EP 0 043 927 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

BUNDESDRUCKEREI BERLIN

# Verfahren zur Herstellung von Azo-Reaktivfarbstoffen

Die vorliegende Erfindung betrifft ein neues Verfahren zur Herstellung von Azo-Reaktivfarbstoffen der allgemeinen Formel

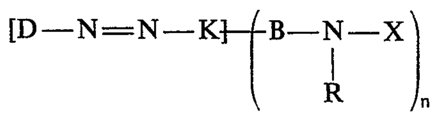

(I)

worin

D = Rest einer Diazokomponente
K = Rest einer Kupplungskomponente
B = direkte Bindung oder Alkylen-($C_1-C_4$)
R = Wasserstoff oder Alkyl-($C_1-C_4$)
X = Reaktivrest der Pyrimidin- oder der Monofluortriazinreihe oder der 2,3-Dichlorchinoxalincarbonsäure-6-Rest
n = 1 oder 2

und worin mindestens einer der Reste D und K eine oder mehrere $SO_3H$-Gruppen enthält und wobei die Gruppierung

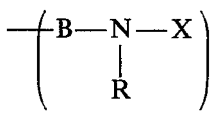

am Rest D und/oder am Rest K gebunden sein kann und wobei B direkt an ein carbocyclisches C-Atom der Reste D und/oder K gebunden ist, und wobei falls X für den 2,3-Dichlorchinoxalincarbonsäure-6-Rest steht, K für den Rest einer Kupplungskomponente der Reihe Naphthole, Acylaminonaphthole oder 1-Phenyl-3-carboxypyrazolone-5 stehen muß, mit Hilfe von Kupplungs- und Acylierungsschritten.

Das Verfahren ist dadurch gekennzeichnet, daß diese Kupplungs- und/oder Acylierungsschritte in Gegenwart von mindestens der äquimolaren Menge einer basischen Lithiumverbindung durchgeführt werden.

Aus der CH-PS 517 159 ist ein Verfahren zur Herstellung spezieller Monochlortriazinyl- oder Dichlortriazinylgruppen enthaltender Reaktivfarbstoffe bekannt, wobei bei einzelnen Umsetzungsschritten zur Einhaltung eines günstigen pH-Bereichs ein säurebindendes Mittel zugesetzt wird. Als säurebindende Mittel werden neben Natrium- und Kaliumverbindungen auch Lithiumverbindungen allgemein erwähnt.

Die Zielrichtung von CH-PS 517 159 ist dabei die Bereitstellung neuer Reaktivfarbstoffe zum Färben verschiedenartiger Substrate.

Aus der großen Zahl der in Frage kommenden Reste X seien beispielhaft die folgenden aufgeführt:

2,4-Difluor-6-chlor-pyrimidinyl-6
2-Fluor-5-chlor-6-methyl-pyrimidinyl-4
2,4,5-Trichlor-pyrimidinyl-6
2-Fluor-5,6-dichlor-pyrimidinyl-4
2-Fluor-4-amino-triazinyl-6
2-Fluor-4-methylamino-triazinyl-6
2-Fluor-4-β-oxyethylamino-triazinyl-6
2-Fluor-4-(2'-,3'- oder 4'-sulfophenylamino)-triazinyl-6
2-Fluor-4-N-ethylphenylamino-triazinyl-6

Als basische Lithiumverbindungen werden bevorzugt eingesetzt: $Li_2CO_3$, $LiHCO_3$, LiOH.

Im einzelnen kann das erfindungsgemäße Verfahren für folgende, für die Herstellung von Verbindungen der Formel (I) denkbare Kupplungs- und/oder Acylierungsschritte Anwendung finden:

1. Die Kupplung diazotierter Amine $D\text{-}NH_2$ mit Kupplungskomponenten

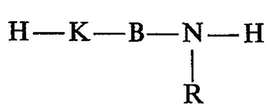

in Gegenwart basischer Lithiumverbindungen.

2. Die Kupplung diazotierter Amine $D-NH_2$ mit Kupplungskomponenten

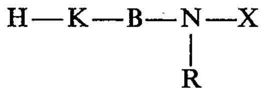

in Gegenwart basischer Lithiumverbindungen.

3. Die Kupplung diazotierter Amine

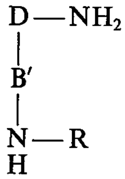

worin $B' = $Alkylen-$(C_1-C_4)$
mit Kupplungskomponenten $H-K$ in Gegenwart basischer Lithiumverbindungen.

4. Die Kupplung diazotierter Amine

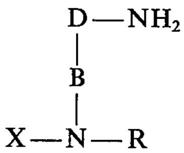

mit Kupplungskomponenten $H-K$ in Gegenwart basischer Lithiumverbindungen.

5. Die Acylierung von Diazokomponenten

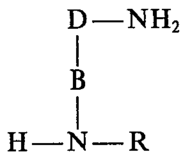

in Gegenwart basischer Lithiumverbindungen mit Reaktivkomponenten der Formel $X-Y$ worin $Y = $anionisch abspaltbarer Rest, wie z. B. Halogen zu

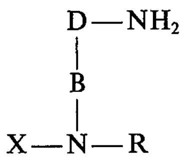

anschließende Diazotierung und Kupplung mit Kupplungskomponenten $H-K$, wobei diese letzte Verfahrensstufe ebenfalls gegebenenfalls in Gegenwart basischer Lithiumverbindungen durchgeführt werden kann.

6. Die Acylierung von Kupplungskomponenten

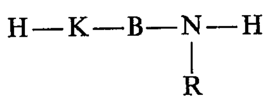

in Gegenwart basischer Verbindungen mit Reaktivkomponenten $X-Y$ unter Abspaltung von $H-Y$ zu

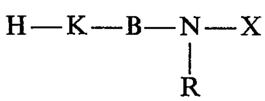

und anschließende Kupplung mit diazotierten Aminen $D-NH_2$, wobei dieser letzte Verfahrensschritt ebenfalls gegebenenfalls in Gegenwart basischer Lithiumverbindungen durchgeführt werden kann.

7. Die Acylierung von Aminoazofarbstoffen

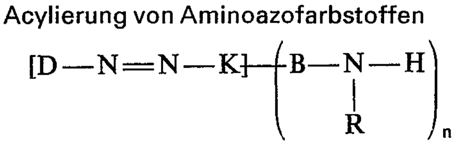

in Gegenwart basischer Lithiumverbindungen mit 1 oder 2 Mol $X-Y$ unter Abspaltung von 1 $(n=1)$ oder 2 $(n=2)$ Mol $H-Y$ zu Verbindungen der Formel (I) wobei Y für einen anionisch abspaltbaren

Rest (vorzugsweise Halogen) steht und wobei die bei den Verfahrensschritten 1 bis 7 angegebenen Reste D, K, B, R, X sowie n die oben bzw. unter der Formel (I) angegebene Bedeutung besitzen.

Besonders bevorzugt wird die Variante 3) in Gegenwart basischer Lithiumsalze durchgeführt.

Für die bei den Varianten 5), 6) und 7) aufgeführten Reaktivkomponenten seien beispielhaft die folgenden genannt:

2,4,6-Trifluor-pyrimidin
2,4,6-Trifluor-5-chlor-pyrimidin
2,4-Difluor-5,6-dichlor-pyridin
2,4-Difluor-5-chlor-6-methyl-pyrimidin
2,4-Difluor-6-amino-triazin
2,4-Difluor-6-methylamino-triazin
2,4-Difluor-6-$\beta$-oxyethylamino-triazin
2,4-Difluor-6-(2'-, 3'- oder 4'-sulfophenylamino)-triazin
2,4-Difluor-6-N-ethylaminophenyl-triazin

Nach dem erfindungsgemäßen Verfahren bevorzugt herstellbare Fabstoffe der Formel (I) sind die folgenden:

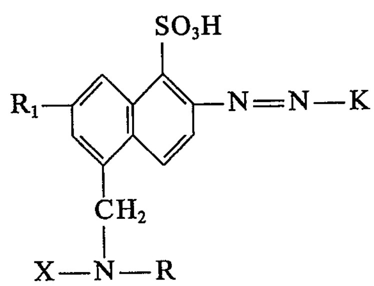

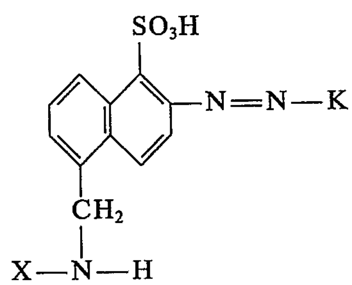

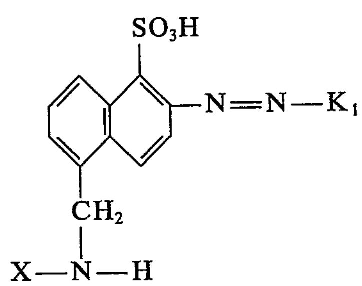

worin K, R und X die oben angegebene Bedeutung haben, $R_1$ für Wasserstoff oder $SO_3H$ steht und $K_1$ für den Rest einer Kupplungskomponente der Pyridon-, Naphthol- oder Acylaminonaphtholreihe steht.

Weitere nach dem erfindungsgemäßen Verfahren bevorzugt herstellbare Feststoffe entsprechend Formel (I) sind:

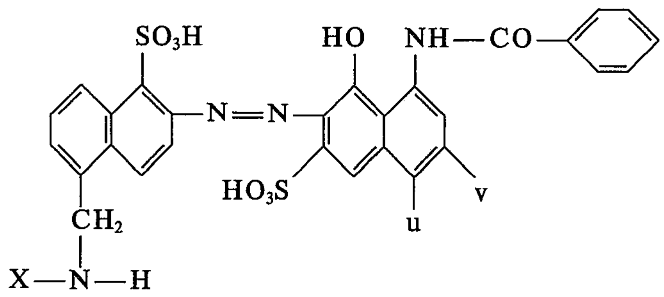

und

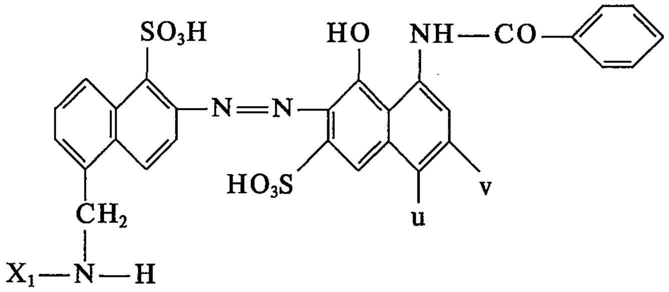

worin X die oben angegebene Bedeutung besitzt, $X_1$ für einen Rest der Fluorpyrimidin-Reihe, vorzugsweise für 2,4-Difluor-5-chlor-pyrimidinyl-6 steht, und worin u und v voneinander verschieden sind und für Wasserstoff oder $SO_3H$ stehen.

Weitere nach dem erfindungsgemäßen Verfahren bevorzugt herstellbare Farbstoffe entsprechend Formel (I) sind:

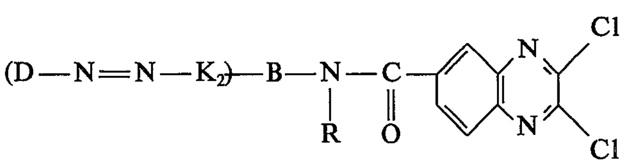

wobei D, B und R die obengenannte Bedeutung besitzen und $K_2$ für eine Kupplungskomponente der Naphthol- oder Acylaminonaphthol- oder der 1-Phenyl-3-carboxypyrazolon-5-Reihe steht.

Die Farbstoffe der Formel (I) liegen nach Durchführung des erfindungsgemäßen Verfahrens in wäßriger Phase, abhängig von Art und Menge der zugesetzten Salze als Lithiumsalze oder als Mischung von Lithiumsalzen mit anderen Alkalimetallsalzen (wie Natrium- oder Kaliumsalze) vor. Sie können daraus durch Zugabe von Natrium- oder Kaliumsalzen ausgesalzen werden.

Eine weitere bevorzugte Aufarbeitungsmethode besteht darin, daß die wäßrige Phase durch Wärmeeinwirkung, wie es bei der Sprüh- oder Walzentrocknung der Fall ist, entfernt wird, wobei die Farbstoffe der Formel (I) sofort als Pulver isoliert werden.

Die bei der Durchführung des erfindungsgemäßen Verfahrens anfallenden wäßrigen Lösungen der Endprodukte können gegebenenfalls nach Zusatz eines Puffers (vorzugsweise eines Phosphatpuffers, insbesondere eines Phosphatpuffers [pH 5,5—6,5]) direkt als Flüssigmarken eingesetzt werden.

Beim erfindungsgemäßen Verfahren werden bei den jeweils unter Anwesenheit einer basischen Lithiumverbindung durchgeführten Kupplungs- und/oder Acylierungsschritten jeweils die 1,0 bis 3, vorzugsweise 1,2 bis 1,5 molaren Mengen der basischen Li-Verbindung eingesetzt.

Bei Durchführung des erfindungsgemäßen Verfahrens wird die Aufarbeitung der Reaktionsprodukte in überraschender Weise erleichtert und die Produkte fallen in großer Reinheit und im wesentlichen frei von störenden Nebenprodukten an.

Die Bereitstellung des erfindungsgemäßen Verfahrens zum Zwecke der Herstellung von Verbindungen der Formel (I) kann daher als eine im überraschenden Maße erfolgende Bereicherung der Technik angesehen werden.

Das Wesen des erfindungsgemäßen Verfahrens soll durch die nachfolgenden Beispiele erläutert werden.

Beispiel 1

36,5 g 2-Amino-1-sulfo-5-aminomethyl-naphthalin werden in 400 ml Eiswasser verrührt und mit 28 ml konzentrierter Salzsäure (Dichte: 1,19) versetzt. Man tropft dann 34 ml 30prozentige Natriumnitrit-Lösung zu. Nach beendigter Diazotierung entfernt man den $NaNO_2$-Überschuß mit Amidosulfonsäure. 61 g 1-Hydroxy-8-benzoylaminonaphthalin-3,5-disulfonsäure werden in 500 ml Wasser warm gelöst. Man kühlt durch Zugabe von Eis ab, setzt 10 g Lithiumcarbonat zu und gibt die Suspension der Diazotierung anteilsweise zu. Man rührt so lange nach, bis die Diazoniumverbindung nicht mehr nachweisbar ist. Der Farbstoff ist fast vollständig ausgefallen. Man stellt das Volumen auf 2,5 l ein, erwärmt auf 30°C und tropft bei pH 8 17,5 ml 2,4,6-Trifluor-5-chlorpyrimidin zu. Der pH-Wert 8 wird durch gleichzeitige Zugabe von 2n-Natronlauge gehalten. Der Farbstoff geht während der Acylierungsreaktion in Lösung. Wenn das Dünnschichtchromatogramm das Ende der Acylierung anzeigt, wird der Farbstoff durch Zugabe von 10 Volumenprozent Natriumchlorid abgeschieden. Nach dem Absaugen, Trocknen und Mahlen erhält man den Farbstoff, der in Form seiner freien Säure der folgenden Formel entspricht:

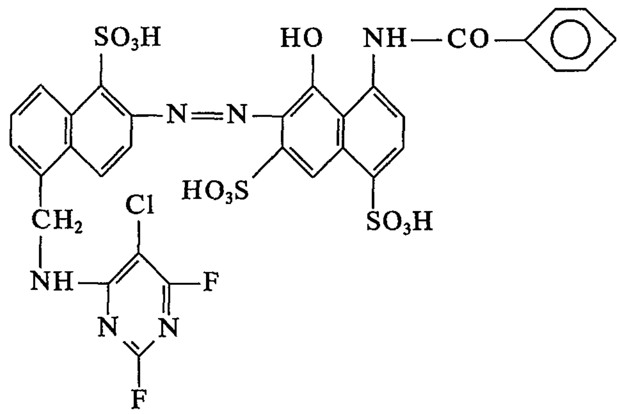

Anstelle der in diesem Beispiel verwendeten 2n-Natronlauge kann auch eine äquivalente Menge einer 10prozentigen Lithiumhydroxid-Lösung eingesetzt werden.

Beispiel 2

20,76 g o-Sulfanilsäure werden in 0,8 Ltr. Eiswasser neutral gelöst. Man läßt dann 16,2 g 2,4,6-Trifluor-1,3,5-triazin zutropfen und hält dabei einen pH-Wert von 3,5—4 durch Zugabe von 10%iger LiOH-Lösung ein. Nach Zugabe des Trifluortriazins rührt man noch einige Minuten nach und läßt dann 69 g Aminoazofarbstoff der Formel

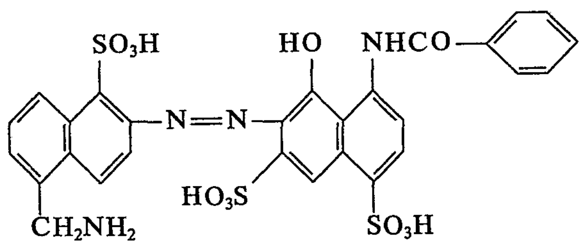

der nach den Angaben von Beispiel 1 erhalten wird und der vor der Zugabe mit 10%iger Lithiumhydroxid-Lösung auf pH 11,5 gestellt wird, einlaufen. Gleichzeitig wird durch Zugabe von 10%iger Lithiumhydroxid-Lösung der pH auf 8,5—9 gestellt. Durch Einwerfen von Eis hält man die Temperatur bei 0—5° C. Nach beendigter Kondensation wird der Farbstoff durch Zugabe von Natriumchlorid ausgesalzt, abgesaugt, getrocknet und gemahlen. Man erhält ein rotes Pulver, das sich in Wasser mit blaustichig roter Farbe löst. Der Farbstoff entspricht der Formel

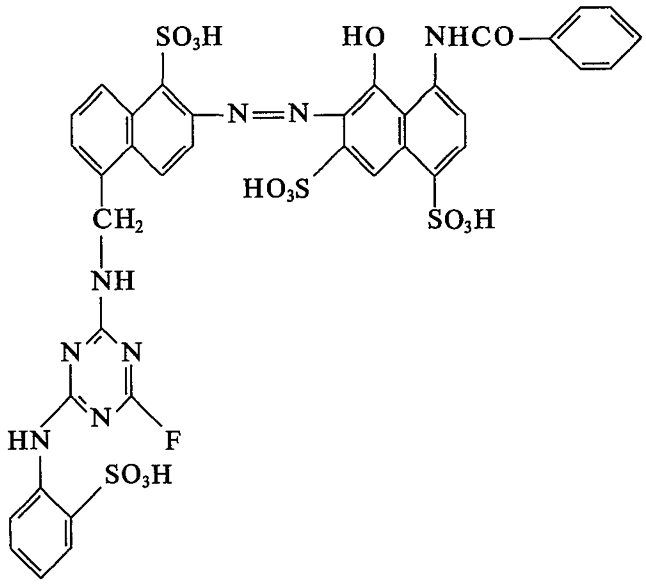

Beispiel 3

72,7 g Aminodisazofarbstoff der Formel

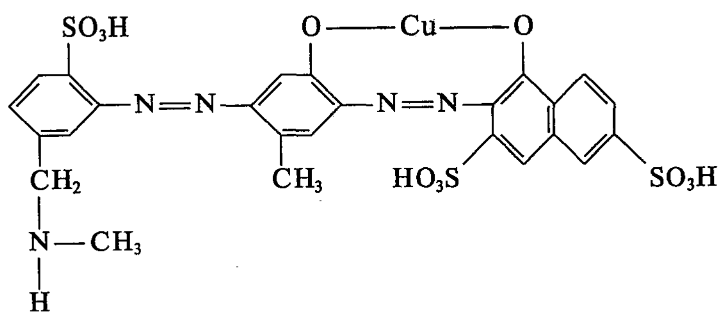

werden bei pH 7 in 300 ml Wasser von 15° C verrührt. Innerhalb 1/2 Stunde tropft man 16,9 g 2,4,6-Trifluor-5-chlorpyrimidin ein und hält gleichzeitig durch Zugabe von 10%iger Lithiumhydroxid-Lösung den pH zwischen 8 und 9. Der Farbstoff geht während der Acylierung in Lösung. Durch ein Dünnschichtchromatogramm stellt man das Ende der Acylierung fest.

Der Farbstoff kann durch Walzentrocknung oder Sprühtrocknung isoliert werden. Man kann aber auch die Lösung nach Zusatz eines Gemisches aus Dinatriumhydrogenphosphat und Mononatriumdihydrogenphosphat direkt als Flüssigmarke verwenden.

Der Ausgangsfarbstoff wird erhalten, indem man 1-Amino-2-sulfo-5-N-methylaminomethyl-benzol in wäßriger Phase bei 0° C und pH 8,5—9,5 mit Acetanhydrid selektiv an der aliphatischen Aminogruppe acetyliert. Daraus wird die Diazoverbindung hergestellt und diese im schwach sauren Medium mit 1-Amino-2-methoxy-5-methyl-benzol gekuppelt. Der resultierende Aminoazofarbstoff wird diazotiert und im bicarbonatalkalischen Bereich auf 1-Hydroxy-3,6-disulfo-naphthalin gekuppelt. Anschließend wird der Disazofarbstoff entmethylierend gekupfert. Nach Verseifung der Acetylaminogruppe durch Erwärmen mit Natronlauge erhält man den kupferhaltigen Aminodiazofarbstoff.

Beispiel 4

30,3 g 2-Amino-naphthalin-1,5-disulfonsäure werden in 200 ml Eiswasser angerührt, mit 21 ml konz.

Salzsäure versetzt und dann 70 ml 10%ige Natriumnitritlösung eingetropft. Die resultierende Diazotierung wird auf 54,4 g des Kondensationsproduktes der Formel

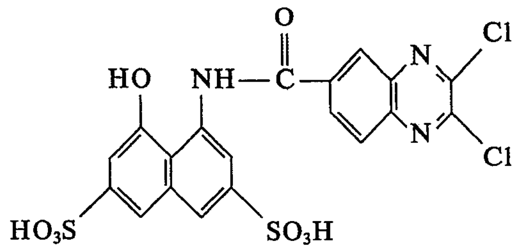

die in 400 ml Wasser angerührt sind, gekuppelt, wobei die dabei freiwerdende Säure durch Zusatz von Lithiumcarbonat neutralisiert wird. Es resultiert eine klare Lösung. Der Farbstoff kann durch Sprühtrocknung oder Walzentrocknung isoliert werden. Man kann aber auch die Lösung nach Zusatz eines Phosphatpuffers aus Dinatriumhydrogen- und Mononatrium-dihydrogen-phosphat direkt als Flüssigmarke verwenden. Der Farbstoff entspricht der Formel

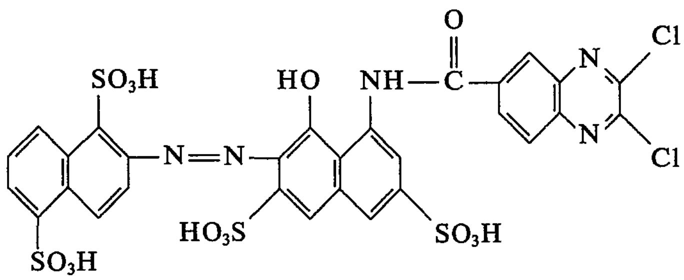

Beispiel 5

41,9 g des Farbstoffs der Formel

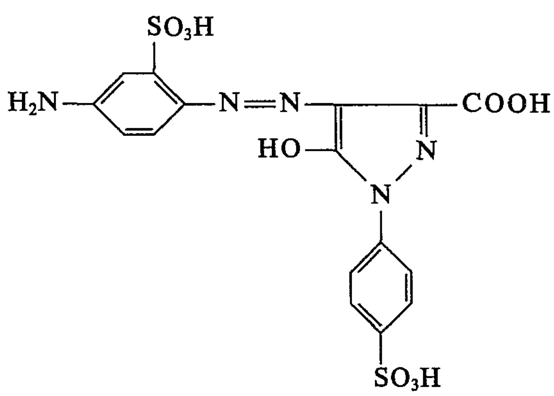

werden in 500 ml Wasser angerührt und auf 40° C erwärmt. Man streut dann 26,2 g 2,3-Dichlorchinoxalincarbonsäurechlorid ein und hält den pH von 6—7 durch Zugabe von Lithiumcarbonat. Nach beendigter Acylierung wird geklärt. Der Farbstoff kann durch Sprühtrocknung oder Walzentrocknung isoliert werden. Man kann aber auch die Lösung nach Zusatz eines Phosphatpuffers aus Dinatriumhydrogen- und Mononatriumdihydrogenphosphat direkt als Flüssigmarke verwenden. Der Farbstoff entspricht der Formel

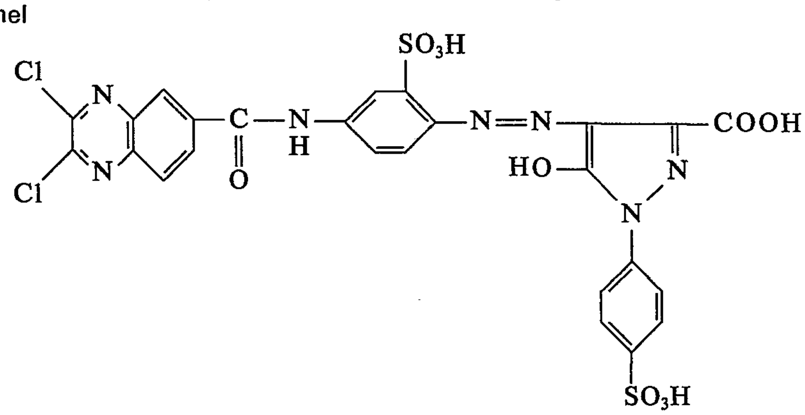

**Patentansprüche**

1. Verfahren zur Herstellung von Azo-Reaktivfarbstoffen der allgemeinen Formel

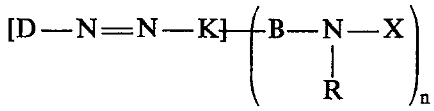 (I)

worin

D = Rest einer Diazokomponente
K = Rest einer Kupplungskomponente
B = direkte Bindung oder Alkylen-($C_1-C_4$)
R = Wasserstoff oder Alkyl-($C_1-C_4$)
X = Reaktivrest der Pyrimidin- oder der Monofluortriazinreihe oder der 2,3-Dichlorchinoxalincarbonsäure-6-Rest
n = 1 oder 2

und worin mindestens einer der Reste D und K eine oder mehrere $SO_3H$-Gruppen enthält und wobei die Gruppierung

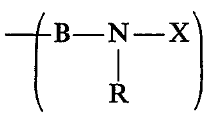

am Rest D und/oder am Rest K gebunden sein kann und wobei B direkt an ein carbocyclisches C-Atom der Reste D und/oder K gebunden ist, und wobei, falls X für den 2,3-Dichlorchinoxalincarbonsäure-6-Rest steht, K für den Rest einer Kupplungskomponente der Reihe Naphthole, Acylaminonaphthole oder 1-Phenyl-3-carboxypyrazolone-5 stehen muß, mit Hilfe von Kupplungs- und Acylierungsschritten, dadurch gekennzeichnet, daß diese Kupplungs- und/oder Acylierungsschritte in Gegenwart von mindestens der äquimolaren Menge einer basischen Lithiumverbindung durchgeführt werden.

2. Verfahren gemäß Anspruch 1, dadurch gekennzeichnet, daß es sich bei der basischen Lithiumverbindung um eine Verbindung der Reihe $Li_2CO_3$, $LiHCO_3$ und $LiOH$ handelt.

3. Verfahren gemäß Anspruch 1—2, dadurch gekennzeichnet, daß Azoreaktivfarbstoffe der folgenden Strukturen hergestellt werden:

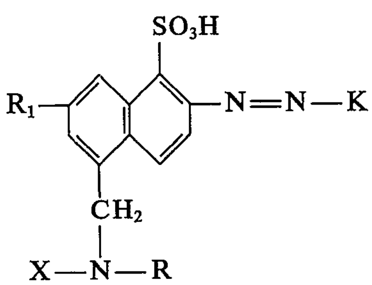

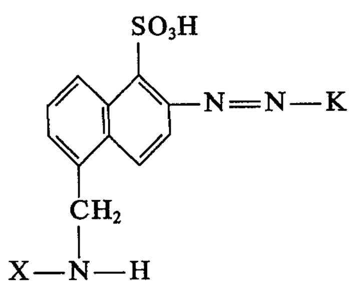

wobei K, R und X die im Anspruch1 angegebene Bedeutung besitzen und $R_1$ für Wasserstoff oder $SO_3H$ steht.

4. Verfahren gemäß Anspruch 1—3, dadurch gekennzeichnet, daß Azoreaktivfarbstoffe der folgenden Struktur hergestellt werden:

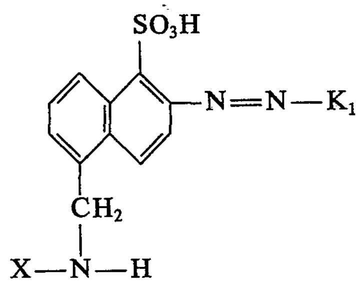

wobei $K_1$ für den Rest einer Kupplungskomponente der Pyridon-, Naphthol- oder Acylaminonaphtholreihe steht.

5. Verfahren gemäß Anspruch 1 bis 3, dadurch gekennzeichnet, daß als einer der Verfahrensschritte die Kupplung von Verbindungen der Formel

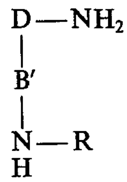

in welcher D und R die in Anspruch 1 angegebene Bedeutung besitzen und B' für Alkylen-($C_1-C_4$) steht mit Kupplungskomponenten H—K wobei K die in Anspruch 1 angegebene Bedeutung besitzt, in Gegenwart mindestens der äquimolaren Menge einer basischen Lithiumverbindung durchgeführt wird.

6. Verfahren gemäß Anspruch 1 bis 3, dadurch gekennzeichnet, daß alle Kupplungs- und Acylierungsschritte in Gegenwart von jeweils mindestens der äquimolaren Menge eines basischen Lithiumsalzes durchgeführt werden.

7. Verfahren gemäß Anspruch 1 bis 5, dadurch gekennzeichnet, daß Azoreaktivfarbstoffe der folgenden Struktur hergestellt werden:

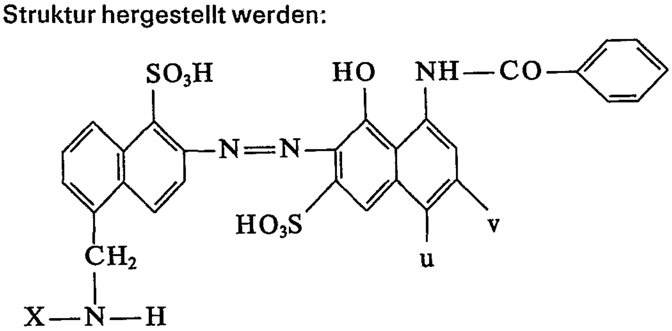

worin X die in Anspruch 1 angegebene Bedeutung besitzt,
u und v voneinander verschieden sind und für Wasserstoff oder $SO_3H$ stehen.

8. Verfahren gemäß Anspruch 1 bis 5, dadurch gekennzeichnet, daß Azoreaktivfarbstoffe der folgenden Struktur hergestellt werden:

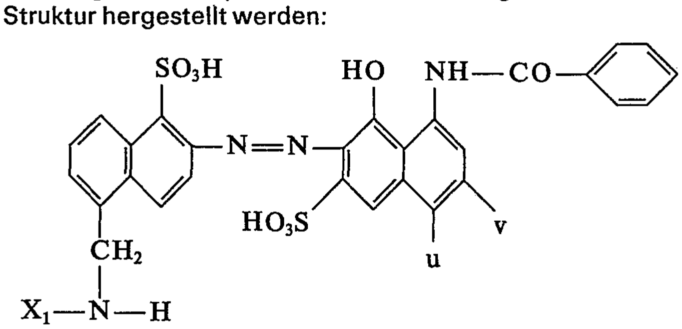

worin $X_1$ für einen Rest der Fluorpyrimidin-Reihe, vorzugsweise für den 2,4-Difluor-5-chlor-pyrimidinyl-6-Rest steht und worin
u und v voneinander verschieden sind und für Wasserstoff oder $SO_3H$ stehen.

## Claims

1. Process for the preparation of azo reactive dyestuffs of the general formula

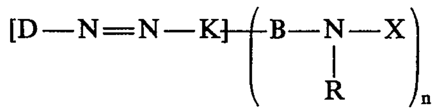

(I)

wherein

D = the radical of a diazo component,
K = the radical of a coupling component,
B = a direct bond or alkylene-($C_1-C_4$),
R = hydrogen or alkyl-($C_1-C_4$),
X = a reactive radical of the pyrimidine or of the monofluorotriazine series or the 2,3-dichloroquinoxaline-6-carboxylic acid radical and
n = 1 or 2,

and wherein at least one of the radicals D and K contains one or more $SO_3H$ groups, and wherein the grouping

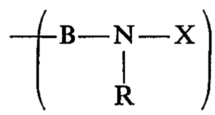

can be bonded to the D and/or K radical, and wherein B is bonded directly to a carbocyclic C atom of the D and/or K radical, and wherein, if X represents the 2,3-dichloroquinoxaline-6-carboxylic acid radical, K must represent the radical of a coupling component of the series of naphthols, acylaminonaphthols or 1-phenyl-3-carboxy-5-pyrazolones, with the aid of coupling and acylation steps, characterised in that these coupling and/or acylation steps are carried out in the presence of at least the equimolar amount of a basic lithium compound.

2. Process according to Claim 1, characterised in that the basic lithium compound is a compound of the series comprising $Li_2CO_3$, $LiHCO_3$ and LiOH.

3. Process according to Claims 1—2, characterised in that azo reactive dyestuffs having the following structures are prepared:

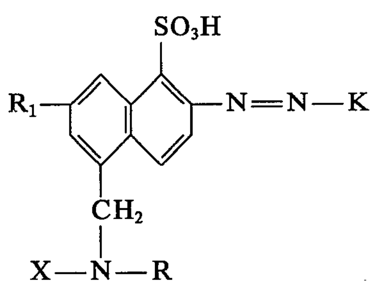

and

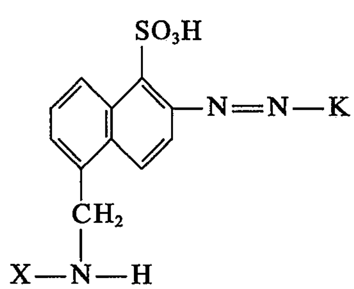

wherein K, R and X have the meaning given in Claim 1 and $R_1$ represents hydrogen or $SO_3H$.

4. Process according to Claims 1—3, characterised in that azo reactive dyestuffs having the following structure are prepared:

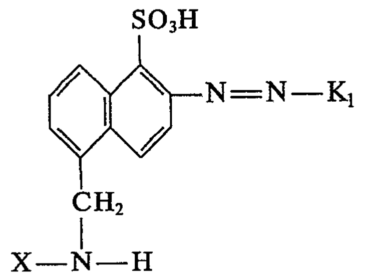

wherein $K_1$ represents the radical of a coupling component of the pyridone, naphthol or acylaminonaphthol series.

5. Process according to Claims 1 to 3, characterised in that, as one of the process steps, compounds of the formula

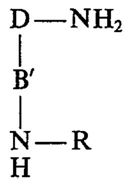

in which D and R have the meaning given in Claim 1 and B′ represents alkylene-($C_1$—$C_4$), are coupled with coupling components H—K
wherein K has the meaning given in Claim 1, in the presence of at least the equimolar amount of a basic lithium compound.

6. Process according to Claims 1 to 3, characterised in that all the coupling and acylation steps are carried out in the presence of in each case at least the equimolar amount of a basic lithium salt.

7. Process according to Claims 1 to 5, characterised in that azo reactive dyestuffs having the following structure are prepared:

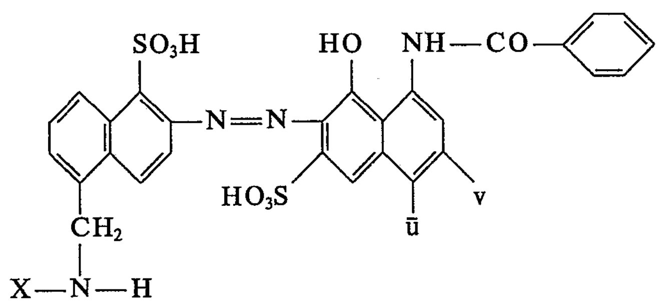

wherein X has the meaning given in Claim 1 and
u and v are different from one another and represent hydrogen or $SO_3H$.

8. Process according to Claims 1 to 5, characterised in that azo reactive dyestuffs having the following structure are prepared:

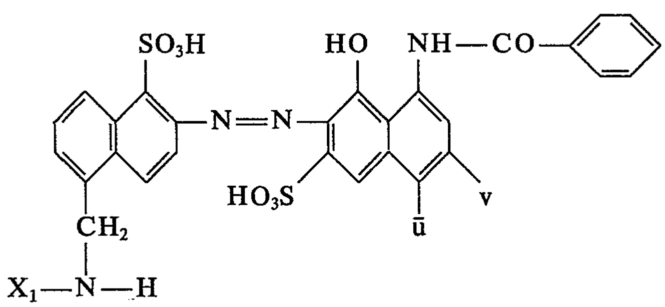

wherein $X_1$ represents a radical of the fluoroprimidine series, preferably the 2,4-difluoro-5-chloropyrimidin-6-yl radical,
and wherein u and v are different from one another and represent hydrogen or $SO_3H$.

**Revendications**

1. Procédé de production de colorants réactifs azoïques de formule générale

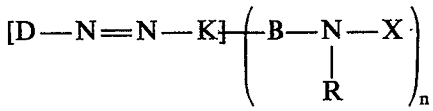

(I)

dans laquelle

D = reste d'un composant diazotable
K = reste d'un copulant
B = liaison directe ou alkylène en $C_1$ à $C_4$
R = hydrogène ou alkyle en $C_1$ à $C_4$
X = reste réactif de la série de la pyrimidine ou de la série de la monofluorotriazine ou reste de l'acide 2,3-dichloroquinoxalinecarboxylique-6
n = 1 ou 2

et dans laquelle au moins l'un des restes D et K contient un ou plusieurs groupes $SO_3H$ et le groupement

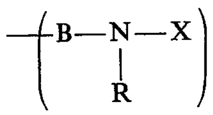

peut être lié au reste D et/ou au reste K et B est lié directement à un atome de carbone carboxylique des restes D et/ou K, et au cas où X représente le reste d'acide 2,3-dichloroquinoxalinecarboxylique-6, K doit représenter le reste d'un copulant de la série des naphthols, des acylaminonaphthols ou des 1-phényl-3-carboxypyrazolones-5, à l'aide d'étapes de copulation et d'acylation, caractérisé en ce que ces étapes de copulation et/ou d'acylation sont conduites en présence dela quantité au moins équimolaire d'un composé basique de lithium.

2. Procédé suivant la revendication 1, caractérisé en ce que le composé de lithium basique est un composé de la série $Li_2CO_3$, $LiHCO_3$ et $LiOH$.

3. Procédé suivant les revendications 1—2, caractérisé en ce qu'on produit des colorants réactifs azoïques des formules suivantes:

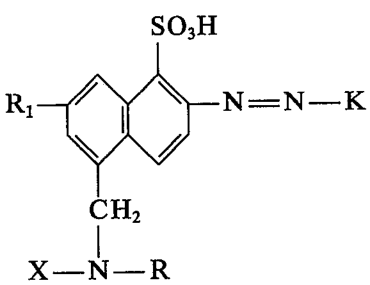

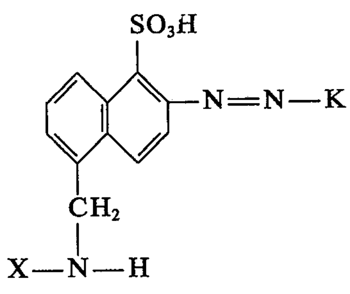

où K, R et X possèdent la définition indiquée dans la revendication 1 et $R_1$ représente l'hydrogène ou le groupe $SO_3H$.

4. Procédé suivant les revendications 1—3, caractérisé en ce qu'on produit des colorants réactifs azoïques de formule suivante:

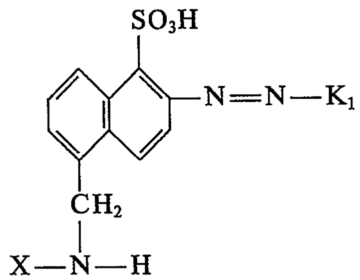

dans laquelle $K_1$ représente le reste d'un copulant de la série de la pyridone, du naphthol ou de l'acylaminonaphthol.

5. Procédé suivant les revendications 1 à 3, caractérisé en ce qu'on conduit, en tant que l'une des étapes du procédé, la copulation de composés des formule

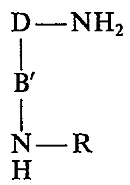

dans laquelle D et R possèdent la définition indiquée dans la revendication 1 et B' représente un reste alkylène en $C_1$ à $C_4$, avec des copulants H—K dans lesquels K a la définition indiquée dans la revendication 1, en présence d'au moins la quantité équimolaire d'un composé de lithium basique.

6. Procédé suivant les revendications 1 à 3, caractérisé en ce que toutes les étapes de copulation et d'acylation sont produites à chaque fois en présence de la quantité au moins équimolaire d'un sel de lithium basique.

7. Procédé suivant les revendications 1 à 5, caractérisé en ce qu'on produit les colorants réactifs azoïques de formule suivante

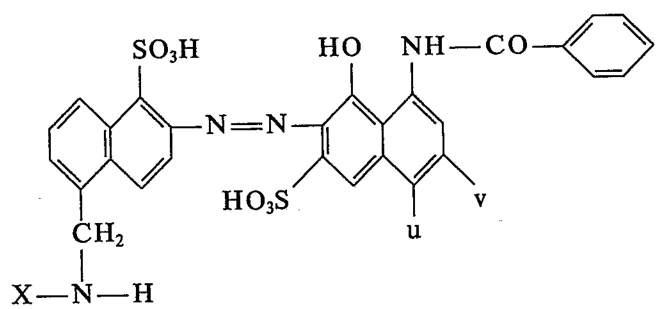

dans laquelle X a la définition indiquée dans la revendication 1,
u et v sont différents l'un de l'autre et représentent l'hydrogène ou $SO_3H$.

8. Procédé suivant les revendications 1 à 5, caractérisé en ce qu'on produit des colorants réactifs azoïques de formule suivante:

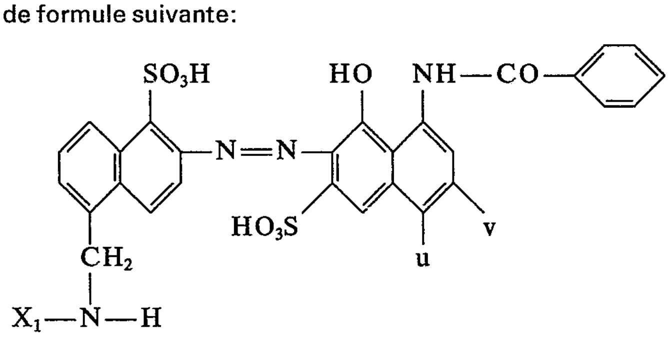

dans laquelle $X_1$ représente un reste de la série de la fluoropyrimidine, de préférence le reste 2,4-difluoro-5-chloropyrimidinyle-6 et
u et v sont différents l'un de l'autre et représentent l'hydrogène ou le groupe $SO_3H$.